# EUROPÄISCHE PATENTSCHRIFT

(11) **EP 4 540 882 B1**
(45) Veröffentlichungstag und Bekanntmachung des Hinweises auf die Patenterteilung: **23.09.2026**
(21) Anmeldenummer: 23758220.0
(22) Anmeldetag: 27.07.2023
(51) Int. Cl.: H01M 8/2484, H01M 8/04082, H01M 8/249

(54) **STRÖMUNGSANORDNUNG ZUM ZUFÜHREN EINES MEDIENSTROMS AN EINLASSÖFFNUNGEN VON BRENNSTOFFZELLENSTAPELN**
FLUID MANIFOLD FOR MEDIA SUPPLYTO INLETS OF FUEL CELL STACKS
DISPOSITIF POUR LA DISTRIBUTION DE FLUIDE AUX APERTURES DES PILES À COMBUSTIBLE

(30) Priorität: 28.07.2022 AT 505722022
(43) Veröffentlichungstag der Anmeldung: 23.04.2025
(73) Patentinhaber: AVL List GmbH, 8020 Graz (AT)
(72) Erfinder: PÖSCHL, Robert, 8111 Gratwein-Straßengel (AT)
(86) Internationale Anmeldenummer: PCT/AT2023/060251
(87) Internationale Veröffentlichungsnummer: WO 2024/020613

(56) Entgegenhaltungen:
- CN-B- 111 952 632
- US-A1- 2004 247 982
- US-A1- 2009 075 153
- US-B2- 8 911 914

## Beschreibung

Die vorliegende Erfindung betrifft eine Strömungsanordnung zum Zuführen eines Medienstroms an Einlassöffnungen von Brennstoffzellenstapeln, wobei die Strömungsanordnung einen Strömungsverteiler mit einem Hauptströmungsabschnitt und mit von dem Hauptströmungsabschnitt abzweigenden Nebenströmungsabschnitten zur strömungstechnischen Verbindung mit den Einlassöffnungen der Brennstoffzellenstapel aufweist, und wobei an dem Hauptströmungsabschnitt ein Strömungseinlass zum Zuführen des Medienstroms in den Hauptströmungsabschnitt ausgebildet ist. Ferner betrifft die Erfindung ein Brennstoffzellensystem mit mehreren Brennstoffzellenstapel und einer solchen Strömungsanordnung.

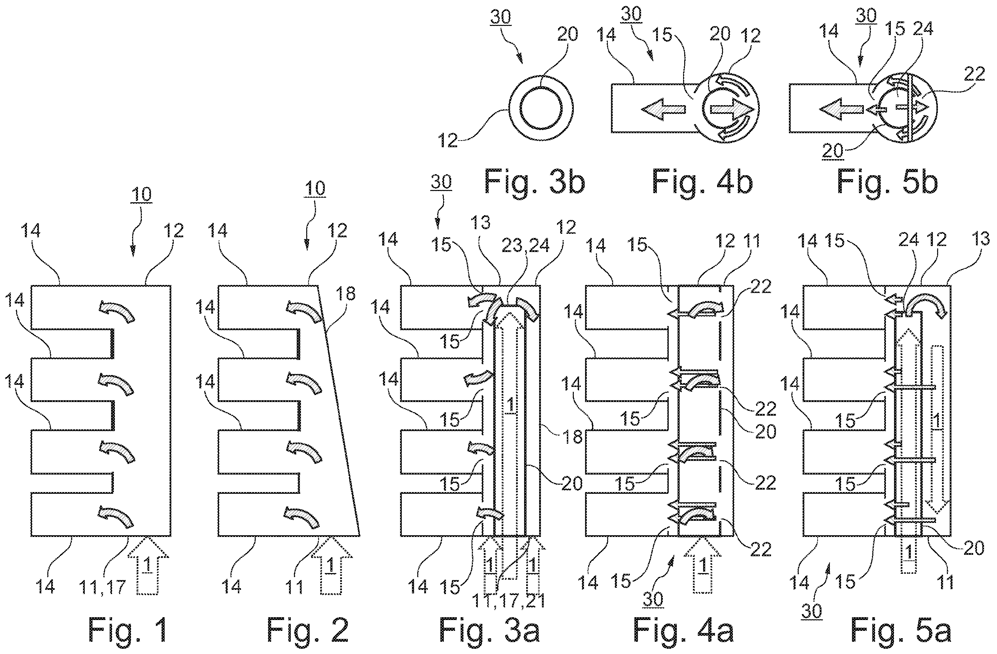

Ein eingangs erwähnter Strömungsverteiler zum Zuführen eines Medienstroms an Einlassöffnungen von Brennstoffzellenstapeln ist aus dem Stand der Technik bekannt und beispielhaft und schematisch in einer Querschnittsansicht in der Figur 1 dargestellt.

Der in Fig. 1 gezeigte Strömungsverteiler 10 weist einen Hauptströmungsabschnitt 12 und sich davon abzweigende Nebenströmungsabschnitte 14 auf, welche ihrerseits mit Einlassöffnungen von Brennstoffzellenstapeln (nicht in Fig. 1 gezeigt) verbunden werden können. Wie in der Fig. 1 ferner zu sehen ist, ist in Bezug auf die gezeigte Orientierung an einer Unterseite 17 des Strömungsverteilers 10 ein Strömungseinlass 11 vorgesehen, durch den ein Medienstrom 1 zur Verteilung an die Brennstoffzellenstapel in den Strömungsverteiler 10 einströmt.

Dadurch, dass der Medienstrom 1 die einzelnen Nebenströmungsabschnitte 14 aus dem Hauptströmungsabschnitt 12 heraus nacheinander durchläuft, kann aufgrund von hydraulischen und thermischen Verlusten nicht die gleiche Masse, Temperatur und Geschwindigkeit des Mediums des Medienstroms 1 an allen Nebenströmungsabschnitten 14 bereitgestellt werden, was aber wünschenswert ist, um alle Brennstoffzellenstapel gleichmäßig betreiben zu können.

In der Figur 2 ist eine Lösung dieses Problems aus dem Stand der Technik dargestellt. Der Hauptströmungsabschnitt 12 weist hier anders als in Fig. 1 keinen konstanten Querschnitt, sondern einen sich entlang seiner Haupterstreckungsrichtung verjüngenden Querschnitt auf. Dazu ist vorliegend eine lange zweite Seitenwandung 18 des Hauptströmungsabschnitts 12 schräg angestellt.

Auch wenn dadurch eine höhere Gleichverteilung der Zuführung des Medienstroms hinsichtlich Masse und Geschwindigkeit an die Nebenströmungsabschnitte 14 möglich ist, ist eine noch höhere Gleichverteilung wünschenswert.

Insbesondere bezüglich der Temperatur des Mediums des Medienstroms 1 lässt sich bei dem Strömungsverteiler 10 der Fig. 1 feststellen, dass die Temperatur des Mediums zu den weiter vom Strömungseinlass 11 entfernten Nebenströmungsabschnitten 14 hin stark abfällt, nämlich um mehrere Grad C, welche bereits relevante Auswirkung für die chemische Umsetzung bewirken können. Dies bedingt, dass die Brennstoffzellenstapel nicht alle gleich hinsichtlich der Strömungsparameter des Medienstroms 1 versorgt und dadurch über die Lebensdauer zunehmend unterschiedlich belastet werden, dadurch stärkere Leistungsverluste und Alterungen hervorgerufen werden und teilweise nicht mehr betrieben werden können, wie es wünschenswert ist.

Strömungsanordnungen zum Zuführen eines Medienstroms an Einlassöffnungen von Brennstoffzellenstapeln sind beispielsweise aus der US 8 911 914 B2 und der CN 111 952 632 B bekannt.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise, eine möglichst hohe Gleichverteilung eines Medienstroms an einzelne Brennstoffzellenstapel zur Verfügung zu stellen.

Die voranstehende Aufgabe wird gelöst durch eine Strömungsanordnung mit den Merkmalen des Anspruchs 1 und ein Brennstoffzellensystem mit den Merkmalen des Anspruchs 15. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Strömungsanordnung beschrieben sind, selbstverständlich auch im Zusammenhang mit dem erfindungsgemäßen Brennstoffzellensystem und umgekehrt, sodass bzgl. der Offenbarung zu den einzelnen Erfindungsaspekten stets wechselseitig Bezug genommen wird oder werden kann.

Erfindungsgemäß ist eine Strömungsanordnung zum Zuführen eines Medienstroms an Einlassöffnungen von Brennstoffzellenstapeln vorgesehen, wobei die Strömungsanordnung einen Strömungsverteiler mit einem Hauptströmungsabschnitt und mit von dem Hauptströmungsabschnitt abzweigenden Nebenströmungsabschnitten zur strömungstechnischen Verbindung mit den Einlassöffnungen der Brennstoffzellenstapel aufweist, und wobei an dem Hauptströmungsabschnitt ein Strömungseinlass zum Zuführen des Medienstroms in den Hauptströmungsabschnitt, insbesondere einen darin angeordneten Strömungseinsatz, ausgebildet ist. Die Strömungsanordnung weist ferner einen in dem Hauptströmungsabschnitt angeordneten und mit dem Strömungseinlass strömungstechnisch gekoppelten Strömungseinsatz mit zumindest einer Strömungsausnehmung zum gleichverteilten Zuführen des Medienstroms via dem Hauptströmungsabschnitt und den Nebenströmungsabschnitten an die Einlassöffnungen auf.

Erfindungsgemäß wird damit die Aufgabe durch das Verwenden eines speziell eingerichteten Strömungseinsatzes in dem Hauptströmungsabschnitt der Strömungsanordnung gelöst. So ist dieser Strömungseinsatz mit seiner zumindest einen Strömungsausnehmung zum gleichverteilten Zuführen des Medienstroms an die Nebenströmungsabschnitte und, darüber wiederum, an die Einlassöffnungen der Brennstoffzellenstapel ausgebildet. Die Gleichverteilung des Medienstroms wird dabei über die zumindest eine Strömungsausnehmung bereitgestellt, da der Medienstrom nicht mehr, wie im Stand der Technik, nur an einer Stelle, nämlich dem Strömungseinlass, in den Hauptströmungsabschnitt einströmt, sondern über zumindest eine weitere Strömungsausnehmung innerhalb des Hauptströmungsabschnitts ausströmen kann, die entlang des Strömungseinsatzes beliebig positioniert sein kann. Durch die Führung des Medienstroms innerhalb des Strömungseinsatzes wird dabei verhindert, dass der Medienstrom ungleichmäßig innerhalb des Hauptströmungsabschnitts zu den Nebenströmungsabschnitten abströmt. Durch den Einsatz der erfindungsgemäßen Strömungsanordnung wird es also möglich, den durch eine Einlassöffnung (oder, wie später näher erläutert, optional mehrere Einlassöffnungen) in den Strömungsverteiler eingeströmten Medienstrom gleichmäßiger, insbesondere hinsichtlich der Masse, Temperatur und/oder Geschwindigkeit des Medienstroms, an die Nebenströmungsabschnitte und damit die Einlassöffnungen der Brennstoffzellenstapel zu verteilen. Soweit hierin von Gleichverteilung gesprochen wird ist nicht zwangsläufig eine mathematisch perfekte Gleichverteilung zu verstehen, da eine solche praktisch nicht realisierbar ist.

Vielmehr ist gemeint, dass die maximale oder bestmögliche Gleichverteilung des Medienstroms hinsichtlich seiner Strömungsparameter zu erzielen versucht wird.

Die einzelnen Brennstoffzellenstapel können dabei in einem Brennstoffzellensystem zusammengefasst sein. Das Brennstoffzellensystem kann weitere Peripherie und Vorrichtungen zum Betreiben der einzelnen Brennstoffzellenstapel umfassen. Dazu können beispielsweise Ventile, Pumpen, Rezirkulationsgebläse usw. gehören.

Außerdem können der Strömungseinsatz und der Strömungsverteiler wahlweise voneinander separate, insbesondere einstückige, Bauteile oder eine integral hergestellte Strömungsanordnung sein. Die erste Variante hat den Vorteil, dass so eine einfache Nachrüstbarkeit bei bestehenden Strömungsverteilern gegeben ist, in dem diese mit dem Strömungseinsatz ausgestattet werden, der in dem Hauptströmungsabschnitt befestigt werden kann. Die zweite Variante hat den Vorteil einer einfachen Herstellung, beispielsweise durch Nutzung eines 3D-Druckverfahrens. Auch der Strömungsverteiler selber mit seinem Hauptströmungsabschnitt und den Nebenströmungsabschnitten kann im Übrigen integral oder mehrteilig hergestellt sein.

Erfindungsgemäß ist vorgesehen, dass zumindest eine der zumindest einen Strömungsausnehmung eine Zwischen-Strömungsausnehmung ist, welche zwischen einem ersten Ende und einem zweiten Ende des Strömungseinsatzes ausgebildet ist. Die beiden Enden können insbesondere Längsenden des Strömungseinsatzes sein. Sie können jeweils mit Enden oder Seitenwandungen, wie einer Oberseite und einer Unterseite, des Hauptströmungsabschnitts zusammenfallen oder daran angeordnet sein. Dadurch, dass eine oder mehrere Strömungsausnehmungen als Zwischen-Strömungsausnehmungen zwischen diesen Enden angeordnet sind, wird eine gleichmäßige Verteilung des Medienstroms an den Brennstoffzellenstapeln ermöglicht, die mit ihren Einlassöffnungen in Strömungshöhe oder entlang der Strömungsrichtung oder Haupterstreckungsrichtung des Strömungseinsatzes zwischen den beiden Enden angeordnet sind. Dies ist besonders vorteilhaft, wenn mehr als zwei Brennstoffzellenstapel verwendet werden. Also etwa drei, vier, fünf, sechs oder mehr Brennstoffzellenstapel. Die Anzahl von Nebenströmungsabschnitten stimmt dabei insbesondere mit der Anzahl der Brennstoffzellenstapel überein, sodass jeweils ein Brennstoffzellenstapel mit seiner Einlassöffnung einem Nebenströmungsabschnitt zugeordnet werden kann, und zwar über eine strömungstechnische Verbindung.

Dabei kann bevorzugt sein, dass der Strömungseinsatz mehrere Zwischen-Strömungsausnehmungen aufweist, welche entlang einer Haupterstreckungsrichtung des Strömungseinsatzes voneinander beabstandet sind. Durch das Vorsehen von mehreren Zwischen-Strömungsausnehmungen, beispielsweise zwei, drei, vier oder mehr Zwischen-Strömungsausnehmungen, wird speziell die Temperaturgleichverteilung des Medienstroms an die Einlassöffnungen der Brennstoffzellenstapel weiter verbessert. Durch die Beabstandung voneinander, die insbesondere eine gleichmäßige Beabstandung sein kann, wird dabei eine gegenseitige Beeinflussung von einzelnen Teilmedienströmen, in die der Medienstrom im Strömungseinsatz durch die Zwischen-Strömungsausnehmungen unterteilt werden kann und welche aus den Zwischen-Strömungsausnehmung austreten, weitestgehend vermieden oder minimiert, sodass diese unbeeinflusst den einzelnen Nebenströmungsabschnitten zugeführt werden können.

Auch kann bevorzugt sein, dass sich je eine der Zwischen-Strömungsausnehmungen auf Strömungshöhe jeweils eines der Nebenströmungsabschnitte befindet. Als Strömungshöhe wird dabei eine in Richtung der Strömung des Medienstroms im Strömungseinsatz, also entlang seiner Haupterstreckungsrichtung, und damit entlang und vorbei an den einzelnen Nebenströmungsabschnitte gemessene Höhe verstanden. Mit anderen Worten liegt je einer Zwischen-Strömungsausnehmung ein Nebenströmungsabschnitt gegenüber, sodass die einzelnen Teilmedienströme des Medienstroms aus den Zwischen-Strömungsausnehmungen passend in die Nebenströmungsabschnitte strömen können.

Erfindungsgemäß ist es vorgesehen, dass zumindest eine der zumindest einen Zwischen-Strömungsausnehmungen an einer von den Nebenströmungsabschnitten, insbesondere Nebenströmungsabschnitt-Öffnungen der Nebenströmungsabschnitte, abgewandten Strömungseinsatz-Seite des Strömungseinsatzes ausgebildet ist. Dadurch kann eine, insbesondere radiale, Umströmung des Strömungseinsatzes rückseitig der Nebenströmungsabschnitte und in Richtung der Nebenströmungsabschnitte erzielt werden. Dabei kann der in dem Strömungseinsatz geführte Medienstrom durch eine Zwischen-Strömungsausnehmung als Teilmedienstrom in Richtung einer (hierin als zweiten bezeichneten) Seitenwandung des Hauptströmungsabschnitts ausströmen, dort aufprallen und in entgegengesetzte Richtung um den Strömungseinsatz herum zu dem Nebenströmungsabschnitt, insbesondere auf selber Strömungshöhe, abgelenkt werden. So kann auf vorteilhafte Weise ein jeweils vom Medienstrom abgetrennter Teilmedienstrom bereitgestellt werden, insbesondere für mehrere Nebenströmungsabschnitte und damit Brennstoffzellenstapel, wobei diese jeweils sehr stark gleichverteilt hinsichtlich von Strömungsparametern, insbesondere Masse, Temperatur und Geschwindigkeit, sind. Ein Strömungsimpuls des Medienstroms wird dabei vorteilhafterweise verringert und die Strömung des Medienstroms in Richtung auf die Nebenströmungsabschnitte besonders gut ausgerichtet. So können auch möglichst ähnliche Anströmungsflächen und Wechselwirkungen mit lokal ähnlichen Abschnitten eines Außengehäuse für alle Nebenströmungsabschnitte erzielt werden, damit jeder Nebenströmungsabschnitt gleiche thermische Verluste zu tragen hat.

Zusätzlich oder alternativ kann auch bevorzugt sein, dass an zumindest einer der zumindest einen Zwischen-Strömungsausnehmung ein Strömungsleitelement zum Leiten des Medienstroms aus der zumindest einen Zwischen-Strömungsausnehmung heraus durch den Hauptströmungsabschnitt in einen der Nebenströmungsabschnitte angeordnet ist. Das Strömungsleitelement kann wahlweise gerade, geneigt (gegenüber einer Vertikalen oder der Haupterstreckungsachse des Strömungseinsatzes) und/oder gekrümmt (insbesondere in Richtung von den Nebenströmungsabschnitten weg) sein. Ferner kann das Strömungsleitelement an der zuvor erwähnten abgewandten Strömungseinsatz-Seite angeordnet sein oder aber alternativ an einer den Nebenströmungsabschnitten zugewandten Strömungseinsatz-Seite angeordnet sein. Selbstverständlich sind auch Positionen dazwischen möglich. Durch das Strömungsleitelement ist eine kontrollierte Strömungsleitung ermöglicht, um unerwünschte Verwirbelungen oder Vermischungen von Teilmedienströmen aus den Strömungsausnehmungen zu verhindern.

Dabei kann bevorzugt sein, dass das zumindest eine Strömungsleitelement zum Erzeugen eines um zumindest einen Teil des Strömungseinsatzes herum und in einen der Nebenströmungsabschnitte führenden Strömungswirbels des Medienstroms ausgebildet ist. Die Länge und der Drall des Strömungswirbels sind dabei über die Position des Strömungsleitelements einerseits und seine Formgebung, wie oben beschrieben beispielsweise geneigt und/oder gekrümmt, andererseits einstellbar. Der Impuls des Medienstroms bzw. Teilmedienstroms aus dem Strömungseinsatz wird dabei umgelenkt. Dadurch wird ein erwünschter und kontrollierter Strömungswirbel um den Strömungseinsatz herum zwischen der (zweiten) Seitenwandung des Hauptströmungsabschnitts und dem Strömungseinsatz zur weiteren Verbesserung der Gleichverteilung des Medienstroms an die Brennstoffzellenstapel bereitgestellt. Anders als bei der zuvor beschriebenen Variante, bei der der Teilmedienstrom durch eine Zwischen-Strömungsausnehmung an der abgewandten Strömungseinsatz-Seite ausströmt, wird der Teilmedienstrom hierbei nicht an der (zweiten) Seitenwand des Hauptströmungsabschnitts aufgeteilt. Dies ermöglicht eine gleichmäßige Verteilung des Medienstroms bei gleichzeitig guter Ausrichtung des Medienstroms auf die Nebenströmungsabschnitte.

Auch kann bevorzugt sein, dass das zumindest eine Strömungsleitelement zwischen dem Strömungseinsatz und einer zweiten Seitenwandung des Hauptströmungsabschnitts des Strömungsverteilers verläuft. Insbesondere kann das Strömungsleitelement strömungsdicht zu einer Seite hin sein, sodass es eine Strömung zu einer Seite hin umlenkt oder nur zu einer Seite hin erlaubt. Das Strömungsleitelement kann beispielsweise integraler Bestandteil des Strömungseinsatzes und/oder des Strömungsverteilers sein oder an einem oder beiden der Vorgenannten befestigt sein. Die zweite Seitenwandung des Hauptströmungsabschnitts ist insbesondere eine den Strömungseinsatz umlaufende Wandung oder Seite. Eine erste Seitenwandung und dritte Seitenwandung des Hauptströmungsabschnitts können jeweils endseitig des Hauptströmungsabschnitts angeordnet sein, wobei diese eine Oberseite und Unterseite des Hauptströmungsabschnitts ausbilden können.

Zusätzlich oder alternativ kann bevorzugt sein, dass zumindest eine der zumindest einen Zwischen-Strömungsausnehmung an einer den Nebenströmungsabschnitten zugewandten Strömungseinsatz-Seite des Strömungseinsatzes ausgebildet ist. Solche Zwischen-Strömungsausnehmungen können alternativ oder zusätzlich zu Zwischen-Strömungsausnehmungen an der abgewandten Strömungseinsatz-Seite vorgesehen sein. So kann wahlweise ein direktes Zuströmen (ohne Umströmung des Strömungseinsatzes) zum Nebenströmungsabschnitt bewerkstelligt werden oder es kann aber von beiden Strömungseinsatz-Seiten aus ein Teilmedienstrom zum Nebenströmungsabschnitt zugeführt werden.

Bevorzugt kann ferner sein, dass die zumindest eine Zwischen-Strömungsausnehmung als ein Schlitz in dem Strömungseinsatz ausgebildet ist. Der Schlitz kann beispielsweise eine rechteckige, oder ovale längliche Form aufweisen. Ein Schlitz weist eine größere Erstreckung in Längsrichtung als in Breitenrichtung auf. Der Schlitz kann seiner Länge nach quer, insbesondere senkrecht, zur Haupterstreckungsrichtung des Strömungseinsatzes ausgebildet sein. Er ist besonders einfach in dem Strömungseinsatz herzustellen und kann einen begrenzten Strömungsquerschnitt aufweisen, um nicht sämtlichen Medienstrom in dem Strömungseinsatz ausströmen zu lassen, sondern nur eine kontrollierte und begrenzte Strömungsmenge.

Es kann vorgesehen sein, dass ein von dem Strömungseinlass entferntes zweites Ende des Strömungseinsatzes an einer ersten Seitenwandung des Strömungsverteilers angeordnet ist. Alternativ und bevorzugt kann aber sein, dass eine der zumindest einen Strömungsausnehmung eine End-Strömungsausnehmung ist, welche an einem von dem Strömungseinlass entfernten zweiten Ende des Strömungseinsatzes ausgebildet ist. Dann ist das zweite Ende nicht an der ersten Seitenwandung des Strömungsverteilers angeordnet, also nicht dicht, sondern durch die End-Strömungsausnehmung offen. Die End-Strömungsausnehmung kann dabei den gesamten oder nahezu gesamten Querschnitt des Strömungseinsatzes einnehmen, welcher dann vollständig am zweiten Ende geöffnet ist. Dies ist eine vergleichsweise einfache Möglichkeit, den Medienstrom von dem Strömungseinlass einfach an die in Strömungshöhe oberen oder, mit anderen Worten, in Strömungsrichtung des Medienstroms letzten Brennstoffzellenstapel gleichmäßig zu verteilen, ohne dass dieser durch Zuströmen zu den ersten Brennstoffzellenstapeln bereits an Temperatur, Masse und/oder Geschwindigkeit einbüßt. Von der End-Strömungsausnehmung ausströmend kann der Medienstrom an der ersten Seitenwandung abprallen und so zu den oberen oder letzten Nebenströmungsabschnitten strömen. Wie zuvor erwähnt kann die erste Seitenwandung dabei eine Oberseite des Hauptströmungsabschnitts sein, die insbesondere gegenüber von einer Unterseite des Hauptströmungsabschnitts an oder nahe des Strömungseinlasses sein kann.

Auch kann bevorzugt sein, dass der Strömungsverteiler zumindest eine weitere Einlassöffnung zum Zuführen des Medienstroms vorbei an dem Strömungseinsatz in den Hauptströmungsabschnitt aufweist und/oder die Einlassöffnung derart ausgebildet ist, dass der Medienstrom vorbei an dem Strömungseinsatz in den Hauptströmungsabschnitt zugeführt werden kann. Für letztere Variante kann die Einlassöffnung entsprechend groß dimensioniert und/oder so positioniert werden, dass sie neben einem Einströmen des Medienstroms in den Strömungseinsatz auch ein Einströmen in den Hauptströmungsabschnitt zwischen dem Strömungseinsatz und seiner zweiten Seitenwandung erlaubt. Insbesondere in Verbindung mit der End-Strömungsausnehmungen ist dies vorteilhaft, weil dann auch die unteren oder ersten Nebenströmungsabschnitte zur Sicherstellung einer Gleichverteilung des Medienstroms an die Brennstoffzellenstapel gut versorgt werden können.

Auch kann bevorzugt sein, dass die Einlassöffnung an einem vom Hauptströmungsabschnitt abzweigenden Einlassabschnitt ausgebildet ist. Dies ist besonders bei in Haupterstreckungsrichtung des Hauptströmungsabschnitts knappem Bauraum förderlich. Auch hierbei kann sich die Einlassöffnung und damit der Einlassabschnitt an der zuvor erwähnten ersten Seitenwandung befinden, von der aus sich der Hauptströmungsabschnitt entlang seiner Haupterstreckungsrichtung seiner Länge nach und/oder der vorgesehenen Medienströmung nach erstrecken kann.

Dabei kann bevorzugt sein, dass zumindest ein weiterer vom Hauptströmungsabschnitt abzweigender Einlassabschnitt mit einer Einlassöffnung beabstandet von dem anderen Einlassabschnitt am Hauptströmungsabschnitt ausgebildet ist. So kann ein weiterer Medienstrom an anderer Stelle, insbesondere der Strömungshöhe nach höherer Stelle, zugeführt werden, sodass hier eine noch bessere Verteilung des Medienstroms ermöglicht wird.

Bevorzugt sein kann ferner, dass zumindest zwei Strömungseinsätze in dem Strömungsverteiler nebeneinander angeordnet sind. Die Strömungseinsätze können jeweils von einem gemeinsamen Strömungseinlass oder einzelnen Strömungseinlässen aus mit einem Medienstrom versorgt werden. So können größere Medienströme einfach bewerkstelligt werden. Vorteilhaft ist dabei, den Hauptströmungsabschnitt und ggf. die Nebenströmungsabschnitte mit größerer Breite auszubilden.

Bevorzugt kann auch sein, dass der Strömungseinsatz und/oder der Hauptströmungsabschnitt ein Rohr ist. Die Ausgestaltung als Rohr ist vergleichsweise unkompliziert und besonders kostengünstig. Dabei sind verschiedene Querschnitte des Rohrs denkbar, beispielsweise rund, eckig, oval, herzförmig, eine Mischung aus den vorstehenden oder ähnlich.

Insbesondere ist der Strömungseinsatz vom Hauptströmungsabschnitt beabstandet, ganz besonders allseitig oder radial beabstandet ist. Insbesondere kann bevorzugt sein, dass der Strömungsverteiler konzentrisch, insbesondere koaxial, zum Hauptströmungsabschnitt angeordnet ist. So kann ein im Wesentlichen gleichmäßiger Abstand zwischen dem Hauptströmungsabschnitt, insbesondere seiner (zweiten) Seitenwandung und dem Strömungseinsatz erzielt werden, die von dem Medienstrom, insbesondere den erzeugten Teilmedienströmen, durchströmt werden kann, um zu den Nebenströmungsabschnitten zu gelangen.

Schließlich kann auch bevorzugt sein, dass Nebenströmungsabschnitt-Öffnungen der Nebenströmungsabschnitte unterschiedlich groß sind. Die Nebenströmungsabschnitt-Öffnungen oder, mit anderen Worten, Einlässe der Nebenströmungsabschnitte dienen dem Einströmen des Medienstroms. Ihre Ausbildung in unterschiedlicher Größe kann beispielsweise durch entsprechende Drosselelemente an diesen und/oder in den Nebenströmungsabschnitten erfolgen. Auch durch eine derartige unterschiedliche Dimensionierung der Nebenströmungsabschnitt-Öffnungen, insbesondere in ihrem Durchmesser, ist es möglich, die Gleichverteilung weiter zu optimieren. Wenn beispielsweise mehr vom Medienstrom bei den in Strömungsrichtung des Medienstroms ersten Nebenströmungsabschnitten ankommen würde, kann durch die Verkleinerung dieser Nebenströmungsabschnitt-Öffnungen gegenüber den in Strömungsrichtung hinten gelegenen Nebenströmungsabschnitte nachgesteuert werden, um eine gleichmäßigere Verteilung zu erreichen, weil der unten ankommende Medienstrom einen kleineren Öffnungsquerschnitt passieren muss, sodass die Strömungsmenge begrenzt wird. Dies kann auch mit der Absicht verfolgt werden die Gleichverteilung der Mischtemperaturen am Eintritt in die Nebenströmungsabschnitte zu beeinflussen.

Ebenfalls Gegenstand der vorliegenden Erfindung ist ein Brennstoffzellensystem mit mehreren Brennstoffzellenstapeln und einer erfindungsgemäßen Strömungsanordnung, wobei jeweils eine Einlassöffnung jedes der Brennstoffzellenstapel mit jeweils einem Nebenströmungsabschnitt der Strömungsanordnung strömungstechnischen verbunden ist.

Damit bringt ein erfindungsgemäßes Brennstoffzellensystem die gleichen Vorteile mit sich, wie sie ausführlich mit Bezug auf die erfindungsgemäße Strömungsanordnung erläutert worden sind.

Dabei kann bevorzugt sein, dass die Einlassöffnungen der Brennstoffzellenstapel zu einer Luftseite oder einer Brennstoffseite der Brennstoffzellenstapel führen.

Entsprechend kann es sich bei dem Medienstrom bevorzugt um einen Luftstrom oder Brennstoffstrom, beispielsweise Wasserstoffstrom, handeln.

Möglich ist selbstverständlich auch, zwei oder mehr erfindungsgemäße Strömungsanordnungen in einem erfindungsgemäßen Brennstoffzellensystem einzusetzen. Die Strömungsanordnungen können für unterschiedliche Medien und damit für unterschiedliche Einlassöffnungen der Brennstoffzellenstapeln eingesetzt werden. Beispielsweise kann eine Strömungsanordnung für die Luftseite der Brennstoffzellenstapel und eine weitere Strömungsanordnung für die Brennstoffseite der Brennstoffzellenstapel verwendet werden. Aber auch innerhalb eines Anlagen-Mediensystems kann ausgehend von einer zentralen Medienversorgung das Aufteilen auf Subsysteme mit jeweils einer Reihe an Brennstoffzellenstapeln eine mehrfache Anwendung vorteilhaft sein.

Weitere Vorteile, Merkmale und Einzelheiten der Erfindung ergeben sich aus der nachfolgenden Beschreibung, in der unter Bezugnahme auf die Zeichnungen Ausführungsbeispiele im Einzelnen beschreiben sind. Es zeigen schematisch:
- Fig. 1: eine vertikale Querschnittsansicht eines Strömungsverteilers gemäß einem ersten Ausführungsbeispiel aus dem Stand der Technik,
- Fig. 2: eine vertikale Querschnittsansicht eines Strömungsverteilers gemäß einem zweiten Ausführungsbeispiel aus dem Stand der Technik,
- Fig. 3a: eine vertikale Querschnittsansicht einer Strömungsanordnung gemäß einem ersten Ausführungsbeispiel der Erfindung,
- Fig. 3b: eine horizontale Querschnittsansicht der Strömungsanordnung der Fig. 3a,
- Fig. 4a: eine vertikale Querschnittsansicht einer Strömungsanordnung gemäß einem zweiten Ausführungsbeispiel der Erfindung,
- Fig. 4b: eine horizontale Querschnittsansicht der Strömungsanordnung der Fig. 4a,
- Fig. 5a: eine vertikale Querschnittsansicht einer Strömungsanordnung gemäß einem dritten Ausführungsbeispiel der Erfindung,
- Fig. 5b: eine horizontale Querschnittsansicht der Strömungsanordnung der Fig. 5a,
- Fig. 6a: eine vertikale Querschnittsansicht eines Brennstoffzellensystems mit einer Strömungsanordnung gemäß einem vierten Ausführungsbeispiel der Erfindung,
- Fig. 6b: eine horizontale Querschnittsansicht der Strömungsanordnung der Fig. 6a,
- Fig. 7: eine horizontale Querschnittsansicht einer Strömungsanordnung gemäß einem fünften Ausführungsbeispiel der Erfindung,
- Fig. 8: eine horizontale Querschnittsansicht einer Strömungsanordnung gemäß einem sechsten Ausführungsbeispiel der Erfindung,
- Fig. 9: eine horizontale Querschnittsansicht einer Strömungsanordnung gemäß einem siebten Ausführungsbeispiel der Erfindung, und
- Fig. 10: eine vertikale Querschnittsansicht einer Strömungsanordnung gemäß einem achten Ausführungsbeispiel der Erfindung.

Identische oder funktionsgleiche Elemente sind in den Figuren 1 bis 10 jeweils mit demselben Bezugszeichen bezeichnet.

Selbstverständlich sind die Bezeichnungen horizontal und vertikal nicht einschränkend zu verstehen, sondern nur gewählt, um die räumliche Zuordnung der Abbildungen zueinander zu verdeutlichen.

Figur 3a zeigt ein Ausführungsbeispiel einer erfindungsgemäßen Strömungsanordnung 30, die um einen Strömungseinsatz 20 gegenüber dem aus dem Stand der Technik bekannten Strömungsverteiler 10 sowie weitere Maßnahmen verbessert ist, wie sie nachstehend näher erläutert werden. Die Strömungsanordnung 30 ist hier in einem vertikalen Querschnitt längs der Haupterstreckungsrichtung, insbesondere Längserstreckungsrichtung, des Strömungseinsatzes 20 gezeigt, die auch mit der Strömungsrichtung des zugeführten Medienstroms 1 übereinstimmt.

Der Strömungseinsatz 20 ist in einem Hauptströmungsabschnitt 12 des Strömungsverteilers 10 angeordnet, der hier einen Hauptströmungskanal bildet. Der Strömungseinsatz 20 ist dabei beabstandet von einer zweiten Seitenwandung 18 des Hauptströmungsabschnitts 12 angeordnet, welche als Mantelwand des Hauptströmungsabschnitts 12 den Strömungseinsatz 20 umgibt. Insbesondere ist der Strömungseinsatz 20 konzentrisch innerhalb des Hauptströmungsabschnitts 12 angeordnet.

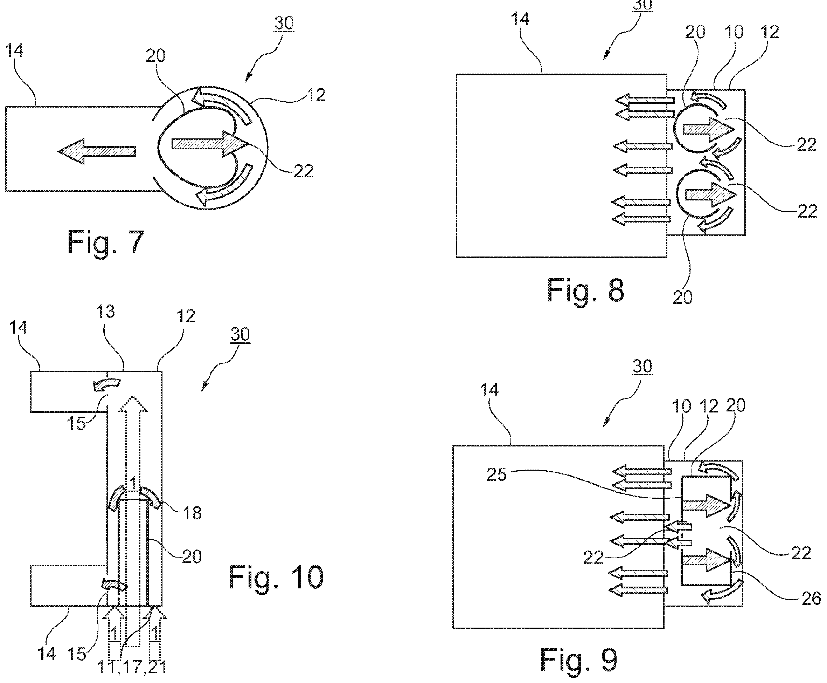

Der Hauptströmungsabschnitt 12, die Nebenströmungsabschnitte 14 und/oder der Strömungseinsätze 20 können rohrförmig ausgebildet sein, wie in der Fig. 3b in einem gegenüber der Fig. 3a horizontalen Querschnitt durch den Hauptströmungsabschnitt 12 und den Strömungseinsatz 20 für den Hauptströmungsabschnitt 12 und den Strömungseinsatz 20 gezeigt ist. Rein beispielhaft sind die rohrförmigen Querschnitte des Hauptströmungsabschnitts 12 und des Strömungseinsatzes 20 hier rund dargestellt, wobei eins davon oder beide alternativ aber auch beispielsweise rechteckig, elliptisch oder herzförmig (siehe Fig. 7) sein können.

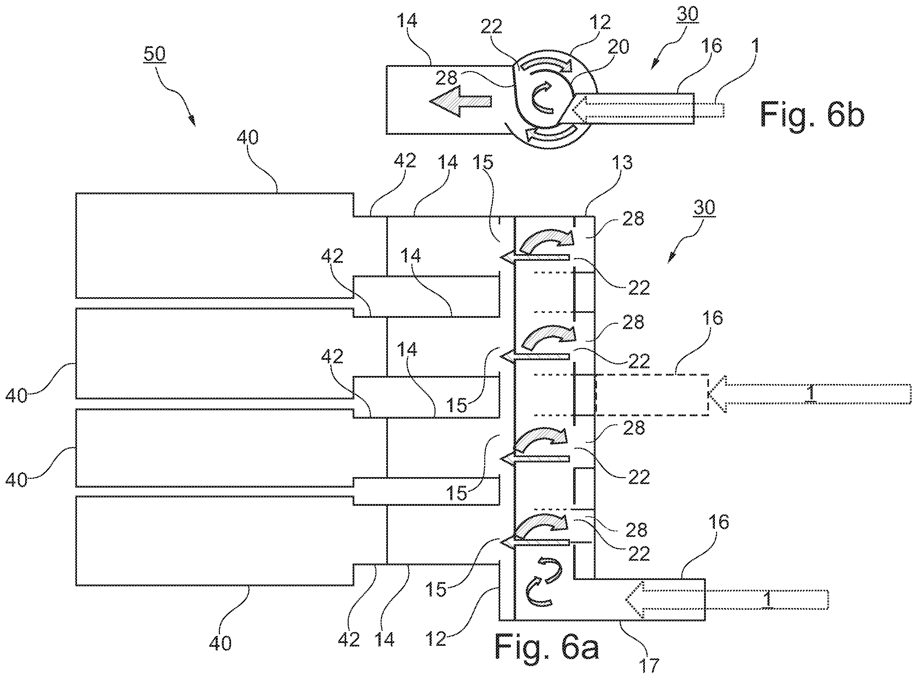

Wie in der Fig. 3a angedeutet ist, umfasst der Hauptströmungsabschnitt 12 einen Strömungseinlass 11 an einer entsprechenden Unterseite 17 des Hauptströmungsabschnitts 12 (die Unterseite 17 ist insbesondere eine dritte Seitenwandung des Strömungsverteilers 10), der strömungstechnisch oder, mit anderen Worten, fluidtechnisch mit dem Strömungseinsatz 20 darin verbunden ist. So kann der Medienstrom 1, der beispielsweise Luft oder Brennstoff für Brennstoffzellenstapel 40 (siehe Fig. 6a) beinhalten kann, in den Strömungseinsatz 20 eingeleitet werden und darin längs des Hauptströmungsabschnitts 12 strömen.

An einem hier als zweites Ende 23 bezeichneten Ende des Strömungseinsatzes 20 befindet sich eine Strömungsausnehmung in Form einer End-Strömungsausnehmung 24. Dazu ist der Strömungseinsatz 20 am zweiten Ende 23 offen. Das zweite Ende 23 liegt einem ersten Ende 21 gegenüber, an dem sich der Strömungseinlass 11 befindet. Durch die End-Strömungsausnehmung 24 tritt der Medienstrom 1 an dem zweiten Ende 23 aus dem Strömungseinsatz 20 aus und gelangt damit über den Umweg des Strömungseinsatzes 20 zu den in Strömungsrichtung oder Haupterstreckungsrichtung des Hauptströmungsabschnitts 12 hinteren oder letzten Nebenströmungsabschnitten 14 und ihren Nebenströmungsabschnitt-Öffnungen 15. Dabei prallt der austretende Medienstrom 1, wie durch die entsprechenden Pfeile, welche Teilströmungsrichtungen oder Teilmedienströme des Medienstroms 1 darstellen, gekennzeichnet ist, an einer ersten Seitenwandung 13 (insbesondere Oberseite) quer, insbesondere senkrecht, zur zweiten Seitenwandung 18 und gegenüber des Strömungseinlasses 11 ab und wird zu den hinteren Nebenströmungsabschnitte 14 abgelenkt.

Zusätzlich sind neben dem beschriebenen Strömungseinlass 11 zwei zweitere Strömungseinlässe 11 an der Unterseite 17 des Hauptströmungsabschnitts 12 und neben dem ersten Ende 21 des Strömungseinsatzes 20 ausgebildet oder aber es ist ein besonders größer Strömungseinlass 11 vorgesehen, der größer als ein Querschnitt des Strömungseinsatzes 20 an seinem ersten Ende 21 ist. Durch diese beiden Strömungseinlässe 11 oder den besonders groß dimensionierten Strömungseinlass 11 wird ebenfalls Medienstrom 1 in den Hauptströmungsabschnitt 12, jedoch ohne Umweg über den Strömungseinsatz 20, eingeleitet. Der so eingeleitete Medienstrom 1 kann einfach zu den in Strömungsrichtung oder Haupterstreckungsrichtung des Hauptströmungsabschnitts 12 vorderen oder ersten Nebenströmungsabschnitten 14 und ihren Nebenströmungsabschnitt-Öffnungen 15 gelangen.

Aus der vorstehend erläuterten Kombination von Medienstrom 1 ohne Passieren des Strömungseinsatzes 20 an den ersten Nebenströmungsabschnitten 14 und mit Passieren des Strömungseinsatzes 20 an den letzten Nebenströmungsabschnitten 14 wird bewerkstelligt, dass eine gute Gleichverteilung des Medienstroms 1 hinsichtlich seiner Masse, Temperatur und Geschwindigkeit an allen Nebenströmungsabschnitten 14 bereitgestellt wird. Dabei wird der letzte Nebenströmungsabschnitt 14 mit thermisch isoliertem heißem Medium großzügig vom entsprechend dimensionierten Strömungseinsatz 20 versorgt.

Wie Fig. 3a zeigt sind die Nebenströmungsabschnitt-Öffnungen 15 der Nebenströmungsabschnitte 14 zudem unterschiedlich groß ausgebildet, und zwar werden die Nebenströmungsabschnitt-Öffnungen 15 hier beispielhaft in Strömungsrichtung zunehmend größer. Dies wird durch entsprechend dimensioniere Drosselelemente an den Nebenströmungsabschnitten 14 bewerkstelligt, wie sie in Fig. 3a aber auch beispielhaft in Fig. 4a, 5a, 6a angedeutet sind. Kann aber zusätzlich oder alternativ auch durch unterschiedlich große Querschnitte der Nebenströmungsabschnitte 14 bereitgestellt werden. Dadurch lässt sich ebenfalls die Verteilung des Medienstroms 1 an die Brennstoffzellenstapel 40 gleichmäßiger gestalten.

Figur 4a zeigt eine gegenüber Fig. 3a alternative Ausführungsform der Strömungsanordnung 30, bei der keine End-Strömungsausnehmung 24 vorgesehen ist. Stattdessen erstreckt sich der Strömungseinsatz 20 vollständig innerhalb des Hauptströmungsabschnittes 12. Zudem sind hier Zwischen-Strömungsausnehmungen 22 in dem Strömungseinsatz 20 vorgesehen, die hier beispielhaft an einer den Nebenströmungsabschnitten 14 abgewandten Strömungseinsatz-Seite 26 des Strömungseinsatzes 20 ausgebildet sind. Zudem sind die Zwischen-Strömungsausnehmungen 22 hier beispielhaft schlitzförmig mit der Schlitzlänge quer zur Haupterstreckungsrichtung des Strömungseinsatzes 20 ausgebildet. Die einzelnen Zwischen-Strömungsausnehmungen 22 sind dabei in Längserstreckungsrichtung des Strömungseinsatzes 20 jeweils voneinander beabstandet und jeweils auf Strömungshöhe der Nebenströmungsabschnitte 14 angeordnet. Die Dimension oder Anzahl der Zwischen-Strömungsausnehmungen 22 werden entsprechend der Verteilweglänge vorteilhafter weise unterschiedlich ausgeführt.

Wie Figur 4b im horizontalen Querschnitt durch die Strömungsanordnung 30 (auf Strömungshöhe eines der Nebenströmungsabschnitte 24) zeigt, wird dabei jeweils auf Strömungshöhe der Zwischen-Strömungsausnehmungen 22 ein Teilmedienstrom des Medienstroms 1 durch den Strömungseinsatz 20 gegen die zweite Seitenwandung 18 geführt, prallt dort ab, umströmt in Richtung des jeweiligen Nebenströmungsabschnitts 14 den Strömungseinsatz 20 und gelangt so zum jeweiligen Brennstoffzellenstapel 40. Dadurch, dass dies jeweils auf Strömungshöhe der Nebenströmungsabschnitte 14 passiert ist insgesamt betrachtet eine gleichverteilte Strömung des Medienstroms 1 zu den einzelnen Brennstoffzellenstapeln 40 ermöglicht, und wie oben weiter oben bereits ausgeführt mit weniger Neigungswinkel, da sich diese bei der Umströmung von dem Strömungseinsatz 20 vergleichmäßigt.

Figur 5a zeigt eine noch weitere alternative Ausführungsform der Strömungsanordnung 30, die eine Kombination aus einer Abwandlung der Ausführungsform der Fig. 3a und der Ausführungsform der Fig. 4a zeigt. Figur 5b zeigt dabei einen horizontalen Querschnitt oberhalb der End-Strömungsausnehmung 24 des Strömungseinsatzes 20. Anders als in der Fig. 4a sind dabei die Zwischen-Strömungsausnehmungen 22 auf einer den Nebenströmungsabschnitten 14 zugewandten Strömungseinsatz-Seite 25 des Strömungseinsatzes 20 ausgebildet, wie Fig. 5b zeigt. Auch die Kombination aus Zwischen-Strömungsausnehmungen 14 auf der den Nebenströmungsabschnitten 14 zugewandten Strömungseinsatz-Seite 25 und der den Nebenströmungsabschnitten 14 abgewandten Strömungseinsatz-Seite 26 ist möglich, wie es in der Fig. 9 gezeigt ist.

Figur 6a zeigt ein Brennstoffzellensystem 50 mit mehreren Brennstoffzellenstapeln 40, die jeweils ihrerseits Einlassöffnungen 42 für den Medienstrom 1 aufweisen. Die Brennstoffzellenstapel 40 können beispielsweise Polymerelektrolytmembran- oder Feststoffoxid-Brennstoffzellenstapel sein. Die Einlassöffnungen 42 sind strömungstechnisch mit den Nebenströmungsabschnitten 14 einer Strömungsanordnung 30 gemäß einem noch weiteren Ausführungsbeispiel verbunden. Figur 6b zeigt einen horizontalen Querschnitt in Bezug auf die Strömungsanordnung 30 der Fig. 6a auf Strömungshöhe einer der Nebenströmungsabschnitte 14.

In Abwandlung zu den vorherigen Ausführungsbeispielen ist hier an jedem der Zwischen-Strömungsausnehmungen 22 ein Strömungsleitelement 28 zum Leiten des Medienstroms 1 aus der jeweiligen Zwischen-Strömungsausnehmung 22 heraus durch den Hauptströmungsabschnitt 12 in einen der Nebenströmungsabschnitte 14 angeordnet.

Die Strömungsleitelemente 28 erstrecken sich dabei zwischen dem Strömungseinsatz 20 und dem Hauptströmungsabschnitt 12. Die in Fig. 6b gezeigte Anordnung der Strömungsleitelemente 28 an der dem Nebenströmungsabschnitt 14 zugewandten Strömungseinsatz-Seite 25 sorgt dabei dafür, dass der Teilmedienstrom aus den Zwischen-Strömungsausnehmungen 22 nicht direkt zum jeweiligen Nebenströmungsabschnitt 14 strömen kann. Stattdessen muss der Teilmedienstrom des Medienstroms 1 den Umweg um den Strömungseinsatz 20 herum gehen, sodass durch das jeweilige Strömungsleitelement 28 ein Strömungswirbel um den Strömungseinsatz 20 herum entsteht, welches nach Umströmung, insbesondere Umrundung, des Strömungseinsatzes 20 zum jeweiligen Nebenströmungsabschnitt 14 führt.

Außerdem zeigen die Fig. 6a eine Ausführungsform der Strömungsanordnung 30, bei der der Medienstrom 1 nicht durch eine Einlassöffnung 11 an der Unterseite 17 des Hauptströmungsabschnitts 12 in diesen eintritt, sondern stattdessen durch einen Einlassabschnitt 16 gelangt, der von dem Hauptströmungsabschnitt 12 quer abgezweigt ist und beispielsweise als Rohr ausgeführt sein kann. Ein optionaler weiterer Einlassabschnitt 16 ist zudem auf einer ungefähr mittigen Strömungshöhe des Hauptströmungsabschnitts 12 gezeigt, durch den zusätzlich ein Medienstrom 1 zugeführt werden kann.

Des Weiteren zeigt Fig. 6b eine alternative Ausführung mit nahezu vollständiger Umströmung des Strömungseinsatz 20 im Uhrzeigersinn und außermittiger Einbindung vom Medienstrom 1, wodurch der erzeugte Einströmdrall in dem gesamten Hauptströmungsabschnitt 12 ausgebildet und weitergenutzt wird, wodurch aufgrund der längeren Strömungspfade eine besonders gleichförmige Einströmung in die entsprechende Nebenströmungsabschnitt-Öffnung 15 möglich wird.

Figur 7 zeigt eine Abwandlung der Ausführungsform der Strömungsanordnung 30 der Fig. 4b, bei der der Strömungseinsatz 20 einen herzförmigen Querschnitt statt eines runden Querschnitts aufweist.

Figur 8 zeigt eine Ausführungsform der Strömungsanordnung 30 in einem horizontalen Querschnitt, welche in einem Hauptströmungsabschnitt 12 zwei Strömungseinsätze 20 aufweist, die sich nebeneinander erstrecken, wobei die Strömungseinsätze 20 beispielhaft gemäß der in den Fig. 4a und 4b gezeigten Ausführungsform ausgebildet sind. Diese Ausführung ermöglicht kleinere Bauräume für den Hauptströmungsabschnitt 12 und eine große Aufweitung der Strömung in Richtung der Nebenströmungsabschnitte 14, falls dieser Querschnitte aus Platzgründen einen weiten aber flachen Rechtecks-Querschnitt in den Nebenströmungsabschnitt-Öffnungen 14 erfordert.

Figur 9 zeigt schließlich eine noch weitere Ausführungsform der Strömungsanordnung 30 in einem horizontalen Querschnitt, welche einen Strömungseinsatz 20 mit einem rechteckigen Querschnitt aufweist. Hier sind Zwischen-Strömungsausnehmungen 22 sowohl an der den Nebenströmungsabschnitten 14 zugewandten Strömungseinsatz-Seite 25 als auch an der den Nebenströmungsabschnitten 14 abgewandten Strömungseinsatz-Seite 26 angeordnet. Ferner sind hier zwei Einlassöffnungen 11 in Bezug auf den Strömungseinsatz 20 vorgesehen, wie anhand der durch die Pfeile angedeuteten Teilmedienströme innerhalb des Strömungseinsatzes 20 erkennbar ist.

Figur 10 zeigt schließlich ein noch weiteres Ausführungsbeispiel einer erfindungsgemäßen Strömungsanordnung 30, bei der im Gegensatz zum Ausführungsbeispiel der Fig. 3a und 3b beispielhaft nur zwei Nebenströmungsabschnitte 14 vorgesehen sind, welche ebenfalls beispielhaft an den jeweiligen Enden der Strömungsanordnung 30 angeordnet sind. Hinzu kommt, dass der Strömungseinsatz 20 in Fig. 10 verkürzt gegenüber dem Strömungseinsatz 20 der Fig. 3a und 3b ist, sodass ein größerer Abstand zwischen der ersten Seitenwandung 13 und dem Strömungseinsatz 20 besteht.

Die voranstehenden Erläuterungen der Ausführungsformen beschreiben die vorliegende Erfindung ausschließlich im Rahmen von Beispielen.

### Bezugszeichenliste

- 1: Medienstrom
- 10: Strömungsverteiler
- 11: Strömungseinlass
- 12: Hauptströmungsabschnitt
- 13: erste Seitenwandung
- 14: Nebenströmungsabschnitt
- 15: Nebenströmungsabschnitt-Öffnung
- 16: Einlassabschnitt
- 17: Unterseite
- 18: zweite Seitenwandung
- 20: Strömungseinsatz
- 21: erstes Ende
- 22: Zwischen-Strömungsausnehmung
- 23: zweites Ende
- 24: End-Strömungsausnehmung
- 25: zugewandte Strömungseinsatz-Seite
- 26: abgewandte Strömungseinsatz-Seite
- 28: Strömungsleitelement
- 30: Strömungsanordnung
- 40: Brennstoffzellenstapel
- 42: Einlassöffnung
- 50: Brennstoffzellensystem

## Patentansprüche

1. Strömungsanordnung (30) zum Zuführen eines Medienstroms (1) an Einlassöffnungen (42) von Brennstoffzellenstapeln (40), wobei die Strömungsanordnung (30) einen Strömungsverteiler (10) mit einem Hauptströmungsabschnitt (12) und mit von dem Hauptströmungsabschnitt (12) abzweigenden Nebenströmungsabschnitten (14) zur strömungstechnischen Verbindung mit den Einlassöffnungen (42) der Brennstoffzellenstapel (40) aufweist, und wobei an dem Hauptströmungsabschnitt (12) ein Strömungseinlass (11) zum Zuführen des Medienstroms (1) in den Hauptströmungsabschnitt (12) ausgebildet ist, wobei die Strömungsanordnung (30) ferner einen in dem Hauptströmungsabschnitt (12) angeordneten und mit dem Strömungseinlass (11) strömungstechnisch gekoppelten Strömungseinsatz (20) mit zumindest einer Strömungsausnehmung (22, 24) zum gleichverteilten Zuführen des Medienstroms (1) via dem Hauptströmungsabschnitt (12) und den Nebenströmungsabschnitten (14) an die Einlassöffnungen (42) aufweist, wobei zumindest eine der zumindest einen Strömungsausnehmung (22, 24) eine Zwischen-Strömungsausnehmung (22) ist, welche zwischen einem ersten Ende (21) und einem zweiten Ende (23) des Strömungseinsatzes (20) ausgebildet ist, **dadurch gekennzeichnet, dass** zumindest eine der zumindest einen Zwischen-Strömungsausnehmung (22) an einer von den Nebenströmungsabschnitten (14) abgewandten Strömungseinsatz-Seite (26) des Strömungseinsatzes (20) ausgebildet ist.

2. Strömungsanordnung (30) nach Anspruch 1, **dadurch gekennzeichnet, dass** der Strömungseinsatz (20) mehrere Zwischen-Strömungsausnehmungen (22) aufweist, welche entlang einer Haupterstreckungsrichtung des Strömungseinsatzes (20) voneinander beabstandet sind.

3. Strömungsanordnung (30) nach Anspruch 2, **dadurch gekennzeichnet, dass** sich je eine der Zwischen-Strömungsausnehmungen (22) auf Strömungshöhe jeweils eines der Nebenströmungsabschnitte (14) befindet.

4. Strömungsanordnung (30) nach einem der Ansprüche 1 bis 3, **dadurch gekennzeichnet, dass** an zumindest einer der zumindest einen Zwischen-Strömungsausnehmung (22) ein Strömungsleitelement (28) zum Leiten des Medienstroms (1) aus der zumindest einen Zwischen-Strömungsausnehmung (22) heraus durch den Hauptströmungsabschnitt (12) in einen der Nebenströmungsabschnitte (14) angeordnet ist.

5. Strömungsanordnung (30) nach Anspruch 4, **dadurch gekennzeichnet, dass** das zumindest eine Strömungsleitelement (28) zum Erzeugen eines um zumindest einen Teil des Strömungseinsatzes (20) herum und in einen der Nebenströmungsabschnitte (14) führenden Strömungswirbels des Medienstroms (1) ausgebildet ist.

6. Strömungsanordnung (30) nach Anspruch 4 oder 5, **dadurch gekennzeichnet, dass** das zumindest eine Strömungsleitelement (28) zwischen dem Strömungseinsatz (20) und einer zweiten Seitenwandung (18) des Hauptströmungsabschnitts (12) des Strömungsverteilers (10) verläuft.

7. Strömungsanordnung (30) nach einem der Ansprüche 1 bis 6, **dadurch gekennzeichnet, dass** zumindest eine der zumindest einen Zwischen-Strömungsausnehmung (22) an einer den Nebenströmungsabschnitten (14) zugewandten Strömungseinsatz-Seite (25) des Strömungseinsatzes (20) ausgebildet ist.

8. Strömungsanordnung (30) nach einem der Ansprüche 1 bis 7, **dadurch gekennzeichnet, dass** die zumindest eine Zwischen-Strömungsausnehmung (22) als ein Schlitz in dem Strömungseinsatz (20) ausgebildet ist.

9. Strömungsanordnung (30) nach einem der voranstehenden Ansprüche, **dadurch gekennzeichnet, dass** eine der zumindest einen Strömungsausnehmung (22, 24) eine End-Strömungsausnehmung (24) ist, welche an einem von dem Strömungseinlass (11) entfernten zweiten Ende (23) des Strömungseinsatzes (20) ausgebildet ist.

10. Strömungsanordnung (30) nach einem der voranstehenden Ansprüche, **dadurch gekennzeichnet, dass** der Strömungsverteiler (10) zumindest eine weitere Einlassöffnung (11) zum Zuführen des Medienstroms (1) vorbei an dem Strömungseinsatz (20) in den Hauptströmungsabschnitt (12) aufweist und/oder die Einlassöffnung (11) derart ausgebildet ist, dass der Medienstrom (1) vorbei an dem Strömungseinsatz (20) in den Hauptströmungsabschnitt (12) zugeführt werden kann.

11. Strömungsanordnung (30) nach einem der voranstehenden Ansprüche, **dadurch gekennzeichnet, dass** die Einlassöffnung (11) an einem vom Hauptströmungsabschnitt (12) abzweigenden Einlassabschnitt (16) ausgebildet ist.

12. Strömungsanordnung (30) nach Anspruch 11, **dadurch gekennzeichnet, dass** zumindest ein weiterer vom Hauptströmungsabschnitt (12) abzweigender Einlassabschnitt (16) mit einer Einlassöffnung (11) beabstandet von dem anderen Einlassabschnitt (16) am Hauptströmungsabschnitt (12) ausgebildet ist.

13. Strömungsanordnung (30) nach einem der voranstehenden Ansprüche, **dadurch gekennzeichnet, dass** zumindest zwei Strömungseinsätze (20) in dem Strömungsverteiler (10) nebeneinander angeordnet sind.

14. Strömungsanordnung (30) nach einem der voranstehenden Ansprüche, **dadurch gekennzeichnet, dass** Nebenströmungsabschnitt-Öffnungen (15) der Nebenströmungsabschnitte (14) unterschiedlich groß sind.

15. Brennstoffzellensystem (50) mit mehreren Brennstoffzellenstapeln (40) und einer Strömungsanordnung (30) nach einem der voranstehenden Ansprüche, wobei jeweils eine Einlassöffnung (42) jedes der Brennstoffzellenstapel (40) mit jeweils einem Nebenströmungsabschnitt (14) des Strömungsverteilers (10) der Strömungsanordnung (30) strömungstechnischen verbunden ist.

## Claims

1. Flow arrangement (30) for supplying a medium flow (1) to inlet openings (42) of fuel cell stacks (40), wherein the flow arrangement (30) comprises a flow distributor (10) having a main flow section (12) and having secondary flow sections (14) branching off from the main flow section (12) for fluidic connection to the inlet openings (42) of the fuel cell stacks (40), and wherein a flow inlet (11) for supplying the medium flow (1) into the main flow section (12) is formed on the main flow section (12), wherein the flow arrangement (30) further comprises a flow insert (20) arranged in the main flow section (12) and fluidically coupled to the flow inlet (11), having at least one flow recess (22, 24) for supplying the medium flow (1) in a uniformly distributed manner to the inlet openings (42) via the main flow section (12) and the secondary flow sections (14), wherein at least one of the at least one flow recess (22, 24) is an intermediate flow recess (22) which is formed between a first end (21) and a second end (23) of the flow insert (20), **characterized in that** at least one of the at least one intermediate flow recess (22) is formed on a flow insert side (26) of the flow insert (20) facing away from the secondary flow sections (14).

2. Flow arrangement (30) according to claim 1, **characterized in that** the flow insert (20) has a plurality of intermediate flow recesses (22) which are spaced apart from one another along a main extension direction of the flow insert (20).

3. Flow arrangement (30) according to claim 2, **characterized in that** in each case one of the intermediate flow recesses (22) is located at the flow height of in each case one of the secondary flow sections (14).

4. Flow arrangement (30) according to any one of claims 1 to 3, **characterized in that** a flow guiding element (28) for guiding the medium flow (1) out of the at least one intermediate flow recess (22) through the main flow section (12) into one of the secondary flow sections (14) is arranged at at least one of the at least one intermediate flow recess (22).

5. Flow arrangement (30) according to claim 4, **characterized in that** the at least one flow guiding element (28) is designed to generate a flow vortex of the medium flow (1) leading around at least a part of the flow insert (20) and into one of the secondary flow sections (14).

6. Flow arrangement (30) according to claim 4 or 5, **characterized in that** the at least one flow guiding element (28) extends between the flow insert (20) and a second side wall (18) of the main flow section (12) of the flow distributor (10).

7. Flow arrangement (30) according to any one of claims 1 to 6, **characterized in that** at least one of the at least one intermediate flow recess (22) is formed on a flow insert side (25) of the flow insert (20) facing towards the secondary flow sections (14).

8. Flow arrangement (30) according to any one of claims 1 to 7, **characterized in that** the at least one intermediate flow recess (22) is formed as a slot in the flow insert (20).

9. Flow arrangement (30) according to any one of the preceding claims, **characterized in that** one of the at least one flow recess (22, 24) is an end flow recess (24) which is formed at a second end (23) of the flow insert (20) remote from the flow inlet (11).

10. Flow arrangement (30) according to any one of the preceding claims, **characterized in that** the flow distributor (10) has at least one further inlet opening (11) for supplying the medium flow (1) past the flow insert (20) into the main flow section (12), and/or the inlet opening (11) is designed in such a way that the medium flow (1) can be supplied past the flow insert (20) into the main flow section (12).

11. Flow arrangement (30) according to any one of the preceding claims, **characterized in that** the inlet opening (11) is formed on an inlet section (16) branching off from the main flow section (12).

12. Flow arrangement (30) according to claim 11, **characterized in that** at least one further inlet section (16) branching off from the main flow section (12) and having an inlet opening (11) is formed on the main flow section (12) spaced apart from the other inlet section (16).

13. Flow arrangement (30) according to any one of the preceding claims, **characterized in that** at least two flow inserts (20) are arranged next to one another in the flow distributor (10).

14. Flow arrangement (30) according to any one of the preceding claims, **characterized in that** secondary flow section openings (15) of the secondary flow sections (14) are of different size.

15. Fuel cell system (50) having a plurality of fuel cell stacks (40) and a flow arrangement (30) according to any one of the preceding claims, wherein in each case an inlet opening (42) of each of the fuel cell stacks (40) is fluidically connected to in each case one secondary flow section (14) of the flow distributor (10) of the flow arrangement (30).

## Revendications

1. Agencement d'écoulement (30) pour amener un flux de milieu (1) à des ouvertures d'entrée (42) d'empilements de piles à combustible (40), l'agencement d'écoulement (30) comportant un distributeur d'écoulement (10) avec une section d'écoulement principale (12) et avec des sections d'écoulement secondaires (14) se ramifiant à partir de la section d'écoulement principale (12) pour la liaison fluidique avec les ouvertures d'entrée (42) des empilements de piles à combustible (40), et une entrée d'écoulement (11) pour amener le flux de milieu (1) dans la section d'écoulement principale (12) étant réalisée sur la section d'écoulement principale (12), l'agencement d'écoulement (30) comportant en outre un insert d'écoulement (20) disposé dans la section d'écoulement principale (12) et couplé fluidiquement à l'entrée d'écoulement (11), avec au moins un évidement d'écoulement (22, 24) pour amener le flux de milieu (1) de manière uniformément répartie aux ouvertures d'entrée (42) via la section d'écoulement principale (12) et les sections d'écoulement secondaires (14), au moins un de l'au moins un évidement d'écoulement (22, 24) étant un évidement d'écoulement intermédiaire (22) qui est réalisé entre une première extrémité (21) et une deuxième extrémité (23) de l'insert d'écoulement (20), **caractérisé en ce qu'**au moins un de l'au moins un évidement d'écoulement intermédiaire (22) est réalisé sur un côté d'insert d'écoulement (26) de l'insert d'écoulement (20) opposé aux sections d'écoulement secondaires (14).

2. Agencement d'écoulement (30) selon la revendication 1, **caractérisé en ce que** l'insert d'écoulement (20) comporte plusieurs évidements d'écoulement intermédiaires (22) qui sont espacés les uns des autres le long d'une direction d'extension principale de l'insert d'écoulement (20).

3. Agencement d'écoulement (30) selon la revendication 2, **caractérisé en ce que** respectivement l'un des évidements d'écoulement intermédiaires (22) se trouve à la hauteur d'écoulement de respectivement l'une des sections d'écoulement secondaires (14).

4. Agencement d'écoulement (30) selon l'une des revendications 1 à 3, **caractérisé en ce qu'**un élément de guidage d'écoulement (28) pour guider le flux de milieu (1) hors de l'au moins un évidement d'écoulement intermédiaire (22) à travers la section d'écoulement principale (12) dans l'une des sections d'écoulement secondaires (14) est disposé au niveau d'au moins un de l'au moins un évidement d'écoulement intermédiaire (22).

5. Agencement d'écoulement (30) selon la revendication 4, **caractérisé en ce que** l'au moins un élément de guidage d'écoulement (28) est réalisé pour générer un tourbillon d'écoulement du flux de milieu (1) conduisant autour d'au moins une partie de l'insert d'écoulement (20) et dans l'une des sections d'écoulement secondaires (14).

6. Agencement d'écoulement (30) selon la revendication 4 ou 5, **caractérisé en ce que** l'au moins un élément de guidage d'écoulement (28) s'étend entre l'insert d'écoulement (20) et une deuxième paroi latérale (18) de la section d'écoulement principale (12) du distributeur d'écoulement (10).

7. Agencement d'écoulement (30) selon l'une des revendications 1 à 6, **caractérisé en ce qu'**au moins un de l'au moins un évidement d'écoulement intermédiaire (22) est réalisé sur un côté d'insert d'écoulement (25) de l'insert d'écoulement (20) tourné vers les sections d'écoulement secondaires (14).

8. Agencement d'écoulement (30) selon l'une des revendications 1 à 7, **caractérisé en ce que** l'au moins un évidement d'écoulement intermédiaire (22) est réalisé sous la forme d'une fente dans l'insert d'écoulement (20).

9. Agencement d'écoulement (30) selon l'une des revendications précédentes, **caractérisé en ce que** l'un de l'au moins un évidement d'écoulement (22, 24) est un évidement d'écoulement d'extrémité (24) qui est réalisé à une deuxième extrémité (23) de l'insert d'écoulement (20) éloignée de l'entrée d'écoulement (11).

10. Agencement d'écoulement (30) selon l'une des revendications précédentes, **caractérisé en ce que** le distributeur d'écoulement (10) comporte au moins une ouverture d'entrée supplémentaire (11) pour amener le flux de milieu (1) dans la section d'écoulement principale (12) en passant devant l'insert d'écoulement (20), et/ou **en ce que** l'ouverture d'entrée (11) est réalisée de telle sorte que le flux de milieu (1) puisse être amené dans la section d'écoulement principale (12) en passant devant l'insert d'écoulement (20).

11. Agencement d'écoulement (30) selon l'une des revendications précédentes, **caractérisé en ce que** l'ouverture d'entrée (11) est réalisée sur une section d'entrée (16) se ramifiant à partir de la section d'écoulement principale (12).

12. Agencement d'écoulement (30) selon la revendication 11, **caractérisé en ce qu'**au moins une section d'entrée supplémentaire (16) se ramifiant à partir de la section d'écoulement principale (12) et présentant une ouverture d'entrée (11) est réalisée sur la section d'écoulement principale (12), à distance de l'autre section d'entrée (16).

13. Agencement d'écoulement (30) selon l'une des revendications précédentes, **caractérisé en ce qu'**au moins deux inserts d'écoulement (20) sont disposés l'un à côté de l'autre dans le distributeur d'écoulement (10).

14. Agencement d'écoulement (30) selon l'une des revendications précédentes, **caractérisé en ce que** des ouvertures de section d'écoulement secondaire (15) des sections d'écoulement secondaires (14) sont de tailles différentes.

15. Système de piles à combustible (50) comportant plusieurs empilements de piles à combustible (40) et un agencement d'écoulement (30) selon l'une des revendications précédentes, dans lequel respectivement une ouverture d'entrée (42) de chacun des empilements de piles à combustible (40) est reliée fluidiquement à respectivement une section d'écoulement secondaire (14) du distributeur d'écoulement (10) de l'agencement d'écoulement (30).
